# EUROPÄISCHE PATENTANMELDUNG

(11) **EP 2 911 276 A1**
(43) Veröffentlichungstag der Anmeldung: **26.08.2015**
(21) Anmeldenummer: 14155888.2
(22) Anmeldetag: 20.02.2014
(51) Int. Cl.: H02K 9/00, H02K 9/10, H02K 9/19

(54) **Kühlkreislauf mit mindestens zwei Kühlmitteln für elektrische Maschine**

(71) Anmelder: Siemens Aktiengesellschaft, 80333 München (DE)
(72) Erfinder: Jäkel, Christian, 47169 Duisburg (DE)

(57) **Zusammenfassung**

Die vorliegende Erfindung offenbart ein effizientes Kühlsystem für eine elektrische Maschine (1). Die elektrische Maschine (1) umfasst einen Kühlkreislauf (10) mit mindestens einem Kühlmittel (22) zum Kühlen der elektrischen Maschine (1), wobei eine Steuereinheit (30) eingerichtet ist, um dem mindestens einen Kühlmittel (22) ein zweites Kühlmittel (24) beizumischen.

## Beschreibung

Die Erfindung liegt auf dem Gebiet elektrischer Maschinen. Bei deren Betrieb wird durch die Umwandlung von elektrischer in mechanische Energie Wärme erzeugt. Diese muss effektiv abgeführt werden, um einen Betrieb der elektrischen Maschine unterhalb einer Grenztemperatur von verwendeten Isolationsmaterialien zu sichern.

Eine elektrische Maschine gemäß der vorliegenden Erfindung umfasst einen Kühlkreislauf mit mindestens einem Kühlmittel zum Kühlen der elektrischen Maschine. Die elektrische Maschine umfasst weiter eine Steuereinheit, die eingerichtet ist, um dem mindestens einen Kühlmittel ein zweites Kühlmittel beizumischen.

Eine solche Ausgestaltung der elektrischen Maschine ist von Vorteil, da durch Beimischung eines zweiten Kühlmittels die Kühlleistung verändert, insbesondere erhöht werden kann.

Gemäß einer weiteren Ausführungsform hat das zweite Kühlmittel eine höhere Wärmekapazität als das mindestens eine Kühlmittel. Dadurch lässt sich die gesamte Wärmekapazität innerhalb des Kühlkreislaufs erhöhen. Dadurch wird es möglich, mit derselben Menge von Kühlmittel mehr Wärme aus der elektrischen Maschine abzuführen.

Gemäß einer weiteren Ausführungsform der elektrischen Maschine, ist das mindestens eine Kühlmittel und/oder das zweite Kühlmittel gasförmig, zumindest bei Kühlbetrieb der elektrischen Maschine. Unter Kühlbetrieb ist zu verstehen, dass die Kühlmittel, das mindestens eine Kühlmittel und/oder das zweite Kühlmittel unter solchen Bedingungen stehen, wie sie bei dem Betrieb der elektrischen Maschine auftreten so dass der elektrischen Maschine durch die Kühlmittel Wärme entzogen wird. Dieser Zustand von erstem und/oder zweitem Kühlmittel wird zum Beispiel durch den bei Betrieb der Maschine vorherrschenden Druck, dem verfügbaren Volumen und der Temperatur abhängig sein.

Gemäß einer Ausführungsform der elektrischen Maschine bilden das mindestens eine Kühlmittel und das zweite Kühlmittel eine ideale Mischung. Die ideale Mischung stellt sich nach der Beimischung ein. Aufgrund der idealen Mischung können die Eigenschaften des ersten Kühlmittels und des zweiten Kühlmittels bei gleichem Druck und gleicher Temperatur beschrieben werden.

Dadurch wird die Auslegung des benötigten ersten und des zweiten Kühlmittels vereinfacht.

Gemäß einer Ausführungsform der Erfindung ist Steuereinheit eingerichtet, einen Anteil des zweiten Kühlmittels innerhalb des Kühlmittelkreislaufs nach der Beimischung, abhängig von einem Leistungszustand der elektrischen Maschine festzulegen. Eine derartige Ausgestaltung der elektrischen Maschine ist von Vorteil, weil sich damit die Kühlleistung den Erfordernissen des Leistungszustands, das heißt insbesondere der in dem Leistungszustand bzw. Betriebszustand anfallenden Verlustleistung anpassen lässt. Dabei steht die Verlustleistung für die aus der Maschine abzuführende Wärmemenge, was erfindungsgemäß durch die hierin vorgeschlagene Erfindung zur Kühlung der elektrischen Maschine erfolgen soll.

Gemäß einer Ausführungsform der Erfindung ist die Steuereinheit eingerichtet, ein Verhältnis von erstem Kühlmittel und zweitem Kühlmittel nach der Beimischung zu steuern und/oder zu regeln. Nach der Beimischung ist im Zusammenhang mit dieser Erfindung zu verstehen als nach der Beimischung des zweiten Kühlmittels zu dem ersten Kühlmittel.

Gemäß einer Ausführungsform der Maschine umfasst diese eine Messeinheit. Die Messeinheit steht in Kommunikation mit der Steuereinheit. Die Messeinheit dient zum Erfassen von mindestens einem Parameter des Kühlmittelkreislaufs, der elektrischen Maschine und/oder der Mischung des mindestens einen Kühlmittels und des zweiten Kühlmittels. Die Messeinheit gestattet es, die Wirksamkeit von durch die Steuereinheit vorgenommenen Beimischungen des zweiten Kühlmittels zu dem ersten Kühlmittel bzw. zu der Mischung aus erstem und/oder zweitem Kühlmittel zu erfassen. Dadurch wird es möglich, zum Beispiel so lange das zweite Kühlmittel beizumischen, bis der gewünschte Kühlungseffekt erreicht ist. Sollte sich bei diesem Verfahren herausstellen, dass weitere Zugabe von zweitem Kühlmittel keine Auswirkung mehr auf die verfügbare Kühlleistung, und damit auf den mit der Messeinheit erfassten Parameter hat, so kann eine entsprechende Warnung ausgegeben werden. Alternativ und/oder zusätzlich kann die Leistung der elektrischen Maschine auch reduziert werden, um eine unzureichende Kühlung der elektrischen Maschine zu vermeiden.

In einer Ausführungsform der elektrischen Maschine ist der mindestens eine Parameter Temperatur, Druck und/oder Zusammensetzung der Mischung aus dem ersten und zweiten Kühlmittel. Dadurch ermöglicht die Messeinheit eine effektive Überwachung relevanter Kontrollparameter für eine wirkungsvolle Kühlung der elektrischen Maschine.

Gemäß einer weiteren Ausführungsform kann der durch die Messeinheit erfasste Parameter dem Leistungszustand der elektrischen Maschine und/oder eine Temperatur eines Maschinenabschnitts der elektrischen Maschine umfassen. So wird es zum Beispiel möglich, für den sicheren Betrieb der elektrischen Maschine kritische Abschnitte unmittelbar während des Betriebs der elektrischen Maschine zu überwachen.

Gemäß einer Ausführungsform der Erfindung ist das zweite Kühlmittel zu dem ersten Kühlmittel außerhalb des Kühlkreislaufs beimischbar. Eine derartige Ausführung der elektrischen Maschine hat den Vorteil, dass in dem gesamten Kühlkreislauf die gewünschte Mischung, das heißt die durch Beimischung erzeugte Mischung aus dem ersten Kühlmittel und dem zweiten Kühlmittel zirkuliert.

Gemäß einer weiteren Ausführungsform der Erfindung ist das zweite Kühlmittel an mindestens einem Abschnitt des Kühlkreislaufs beimischbar. Durch eine derartige Ausgestaltung der elektrischen Maschine kann das zweite Kühlmittel gezielt an solchen Abschnitten der elektrischen Maschine bereitgestellt werden, in denen eine besonders hohe thermische Beanspruchung zu erwarten ist.

Gemäß einer Ausführungsform umfasst die elektrische Maschine einen Stator und einen radial zu einer Drehachse angeordneten Rotor.

Gemäß einer Ausführungsform der elektrischen Maschine umfasst der Kühlkreislauf einen Wärmetauscher. Der Wärmetauscher ist von Vorteil, um die durch Kühlung abtransportierte Leistung bzw. Wärmemenge effizient aus dem System zu entfernen. Gemäß einer Ausführungsform der vorliegenden Erfindung kann die elektrische Maschine in dem Kühlkreislauf eine Kühlmittelpumpe umfassen. Die Kühlmittelpumpe hat den Vorteil, dass sie ein stetiges Zirkulieren des Kühlmittels bereitstellen kann, wodurch die Wirksamkeit der Kühlung erhöht wird. Gemäß einer Ausführungsform der vorliegenden Erfindung ist die elektrische Maschine ein Generator oder ein Elektromotor.

Die vorliegende Erfindung wird nun anhand der beigefügten Figuren und der folgenden Beschreibung erläutert.
- Figur 1: zeigt eine erste Ausführungsform der elektrischen Maschine gemäß der vorliegenden Erfindung,
- Figur 2: zeigt eine zweite Ausführungsform der elektrischen Maschine gemäß der vorliegenden Erfindung,
- Figur 3: zeigt eine elektrische Maschine 100 gemäß dem Stand der Technik.

Bekanntermaßen muss die in einem Generator 1 entstehende Wärme bei der Umwandlung von mechanischer in elektrischer Energie durch ein geeignetes Kühlsystem abgeführt werden. Bei dem Betrieb des Generators 1 darf eine bestimmte Grenztemperatur der verwendeten Isolierstoffklassen nicht überschritten werden. Bei Überschreiten der Grenztemperaturen steht die Isolationswirkung der verwendeten Isolierwerkstoffe nicht mehr zuverlässig zur Verfügung, so dass es zu einer Beschädigung der elektrischen Maschine 1 bzw. des Generators kommen kann. Darüber hinaus kommt es bei einem Zusammenbruch der für den Betrieb der elektrischen Maschine 1 erforderlichen Isolierung zu einer Gefährdung etwa des Bedienpersonals. In elektrischen Maschinen im unteren Leistungsbereich, etwa bis 300 MVA wird typischerweise Luft als Kühlmittel genutzt. Die Baugröße der elektrischen Maschine 1 bestimmt wesentlich die Bemessungsscheinleistung. Es ist wünschenswert, bei gleicher Bemessungsleistung die Baugröße des Generators zu reduzieren, da so eine günstigere Herstellung des Generators erreicht werden kann.

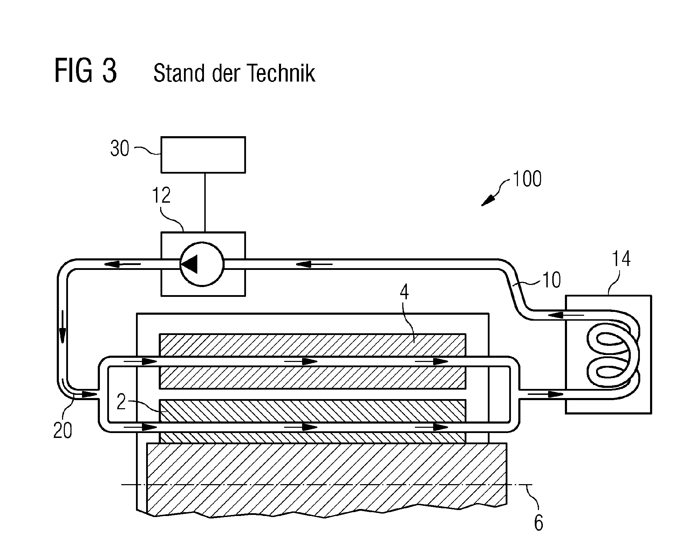

Fig. 3 zeigt einen Generator 100 gemäß dem Stand der Technik in einer Schnittdarstellung. Erkennbar ist ein Blick in einen Quadranten einer elektrischen Maschine 100 gemäß dem Stand der Technik. Die elektrische Maschine 100 umfasst eine Drehachse 6. An dieser ist in radialer Richtung zur Drehachse 6 ein Stator 2 angeordnet. Der Stator 2 besteht typischerweise aus einzelnen Statorblechen. Zwischen diesen können Hohlräume bestehen, durch die ein Kühlmittel 20 fließt. In Figur 3 ist das Kühlmittel 20 in entsprechenden Leitungen eines Kühlkreislaufs 10 gezeigt. Der Fachmann wird ohne weiteres verstehen, dass alternativ oder zusätzlich auch Hohlräume innerhalb der elektrischen Maschine 100, insbesondere innerhalb des Rotors 2 und/oder des Stators 4 als Öffnungen zum Durchströmen mit dem Kühlmittel 20 vorgesehen sein könnten, ohne dass für den Kühlkreislauf 10 besondere Leitungen erforderlich wären. Der Kühlkreislauf 10 kann eine Pumpe 12 umfassen. Die Pumpe 12 stellt eine fortlaufende Konvektion des Kühlmittels 20 innerhalb des Kühlkreislaufs dar. Die Förderleistung der Pumpe 12 bestimmt sich aus der Wärmekapazität der Kühlflüssigkeit 20 und einer benötigten Zeitdauer zum Übertrag der abzuführenden Wärmemenge von Bestandteilen der elektrischen Maschine 100 auf das Kühlmittel 20. Darüber hinaus wird die Förderleistung der Pumpe 12 begrenzt durch das Wärmeaustauschvermögen eines Wärmetauschers 14, wie schematisch gezeigt. Der Fachmann wird unmittelbar verstehen, wie sich aus den Auslegungen des Kühlkreislaufs 10, des Wärmetauschers 14 und/oder der verwendeten Menge an Kühlmittel 20 ebenso wie dem Volumen der zu kühlenden Maschine 100 die Pumpe 12 und ihre Förderleistung zu dimensionieren sind. Mittels einer Steuereinheit 30, wie in Figur 3 gezeigt, kann die Fördermenge der Kühlmittelpumpe 12 an einen Betriebszustand der elektrischen Maschine 100 angepasst werden. Im Stand der Technik ist es jedoch üblich, die Pumpe an den Rotor zu koppeln, so dass die Kühlmittelpumpe einen konstanten Massenstrom an Kühlmittel fördert und keine weitere Regelung des Kühlmittelstroms mehr möglich ist.

Wird die elektrische Maschine zum Beispiel unter Volllast betrieben, so wird die Kühlmittelpumpe 12 bei maximaler Förderleistung betrieben, die sich ergibt aus der maximal bereitzustellenden Kühlleistung der elektrischen Maschine 100, um einen sicheren Betrieb der elektrischen Maschine 100 zu garantieren.

Dem Fachmann sind Verfahren und Methoden zur Dimensionierung von Kühlkreisläufen 10, Kühlmittelpumpen 12, Kühlleitungen und/oder Wärmetauschern 14 hinreichend bekannt, so dass darauf im Zusammenhang mit dieser Erfindung nicht eingegangen werden muss. Für Generatoren im unteren Leistungsbereich, zum Beispiel bis 300 MVA wird im Stand der Technik Luft als gasförmiges Kühlmittel 20 verwendet.

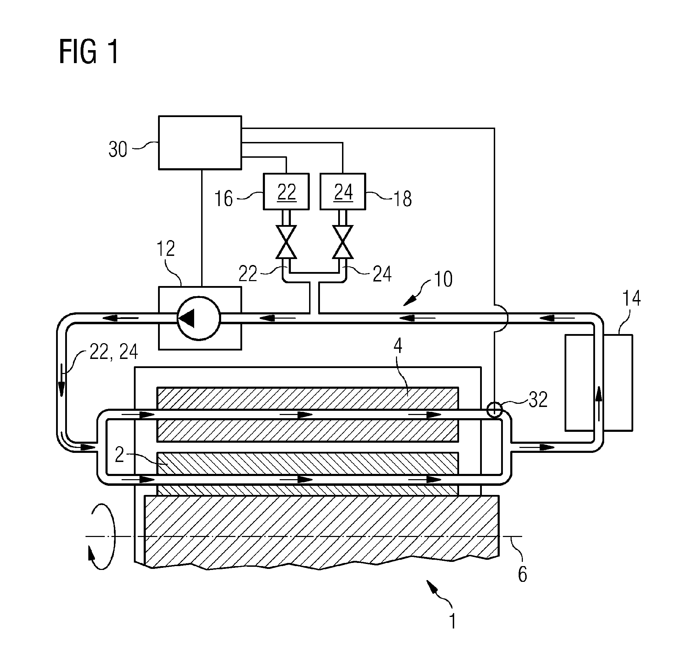

Figur 1 zeigt eine erste Ausführungsform der elektrischen Maschine 1 gemäß der vorliegenden Erfindung. Wie schon in Figur 3, wird die elektrische Maschine 1 in einer Schnittansicht gezeigt. Gleiche Bestandteile der elektrischen Maschine 1 gemäß der vorliegenden Erfindung werden mit gleichen Bezugszeichen wie schon in Figur 3 bezeichnet. Gemäß der Erfindung ist ein erstes Kühlmittelreservoir 16 vorgesehen, das ein erstes Kühlmittel 22 bereitstellt. In einem zweiten Kühlmittelreservoir 18 wird ein zweites Kühlmittel 24 bereitgestellt.

Im Stand der Technik sind hinsichtlich eines Kühlmittelreservoirs durchzugsgekühlte, insbesondere durchzugsbelüftete Maschinen bekannt, die ein Kühlmittelreservoir für ein erstes Kühlmittel umfassen. Daneben sind im Stand der Technik kreislaufgekühlte, insbesondere kreislaufbelüftete Maschinen bekannt, die anders als die Maschine gemäß der vorliegenden Erfindung kein Kühlmittelreservoir umfassen.

Gemäß der vorliegenden Erfindung kann mittels einer Steuereinheit 30 dem ersten Kühlmittel 22 das zweite Kühlmittel 24 beigemischt werden. Dies führt dazu, dass stromaufwärts von der Kühlmittelpumpe 12 bereits eine Mischung von erstem Kühlmittel 22 und zweitem Kühlmittel 20 innerhalb des Kühlkreislaufs 10 strömt. Es ist von Vorteil, das zweite Kühlmittel so zu wählen, dass es eine höhere Wärmekapazität aufweist als das erste Kühlmittel 22. So kann lastabhängig das zweite Kühlmittel beigemischt werden. In Figur 1 erfolgt die Mischung, wie bereits erwähnt außerhalb des eigentlichen Kühlkreislaufs 10. Das zweite Kühlmittel 24 ist also außerhalb des Kühlkreislaufs 10 beimischbar. Wird aufgrund einer höheren Last der elektrischen Maschine 1 eine höhere Kühlleistung benötigt, so kann der Anteil des zweiten Kühlmittels 24 innerhalb des Kühlkreislaufs 10 erhöht werden, da sich mit der höheren Wärmekapazität des zweiten Kühlmittels 24 gegenüber der Wärmekapazität des ersten Kühlmittels 22 mehr Wärme aus der elektrischen Maschine 1 entfernen lässt.

Gemäß der vorliegenden Erfindung kann der Anteil des zweiten Kühlmittels 24 gezielt bei einer Erhöhung der Leistung, der elektrischen Maschine 1 erhöht werden, um die erforderliche Kühlleistung weiterhin sicherzustellen. Handelt es sich bei dem ersten Kühlmittel 22 und dem zweiten Kühlmittel 24 um gasförmige Kühlmittel, wie zum Beispiel Luft, Stickstoff oder Sauerstoff für das erste Kühlmittel, und zum Beispiel Helium für das zweite Kühlmittel 24, so kann sich zwischen dem ersten Kühlmittel 22 und dem zweiten Kühlmittel 24 eine ideale Mischung einstellen. Für eine ideale Mischung von erstem Kühlmittel 22 und zweitem Kühlmittel 24 lässt sich das Gemisch aus erstem Kühlmittel 22 und zweitem Kühlmittel 24 durch dieselbe Temperatur und denselben Druck beschreiben, so dass die jeweiligen Volumenanteile den Massenanteilen entsprechen. Dadurch wird die Beschreibung des Kühlprozesses vereinfacht. Für eine ideale Mischung von 0,7 Masse-% Helium, die dem ersten Kühlmittel 22, zum Beispiel Luft hinzugefügt werden, so erhöht sich die Wärmekapazität des Gemisches aus erstem Kühlmittel 22 und zweitem Kühlmittel 24 um 10 %. Bei Zugabe von 1,7 Masse-% erhöht sich die Wärmekapazität des Gemisches aus erstem Kühlmittel 22 und zweitem Kühlmittel 24 um 20 %, und schließlich bei Beimischung von 6,4 Masse-% um 80 bis 90 %. Da die Wärmekapazität des Gasgemisches bei unverändertem Warm- und Kaltgastemperaturen direkt proportional zur abtransportierbaren Wärmemenge ist, steigt auch die im Betrieb abtransportierbare Wärmemenge um denselben Faktor. Die in Figur 1 gezeigte elektrische Maschine 1 umfasst zudem eine Messeinheit 32. Die Messeinheit 32 ist an die Steuereinheit 30 gekoppelt. Durch die Messeinheit 32 können bestimmte Parameter der Mischung aus erstem Kühlmittel 22 und zweitem Kühlmittel 24 innerhalb des Kühlkreislaufs 10 ermittelt werden. Solche Parameter können zum Beispiel sein die Temperatur, der Druck, und/oder der Anteil des ersten Kühlmittels 22 an der Mischung und/oder der Anteil des zweiten Kühlmittels an der Mischung. Durch die Bereitstellung der Messeinheit 32 hat die Steuereinheit 30 die Möglichkeit, auf veränderte Parameter, wie sie von der Messeinheit 32 ermittelt werden, zu reagieren. Dazu gehört zum Beispiel, den Anteil des zweiten Kühlmittels innerhalb der Mischung aus dem ersten und dem zweiten Kühlmittel in dem Kühlkreislauf 10 zu erhöhen, um damit, wie bereits erläutert, die Kühlleistung zu erhöhen. Die Kühlleistungen sind bei Eintritt in den Rotor ohne Kupplung gezeigt. Für den Fachmann ist jedoch selbstverständlich, dass entsprechende Kupplungen gegebenenfalls vorzusehen sind, da der Rotor 2 um die Drehachse 6 rotiert. Der Kühlkreislauf 10 ist in Fig. 1 nur beispielhaft durch entsprechende Leitungen gezeigt. Für den Fachmann ist offensichtlich, dass anstelle gesonderter Leistungen auch entsprechende Öffnungen innerhalb der elektrischen Maschine 1, zum Beispiel innerhalb des Rotors 2 und/oder des Stators 4 vorgesehen sein könnten. Die stromabwärts von dem ersten Kühlmittelreservoir 16 und/oder stromabwärts von dem zweiten Kühlmittelreservoir 18 gezeigten Ventile werden vorteilhaft durch die Steuereinheit 30 überwacht und gesteuert. Dadurch lässt sich der Zufluss von erstem Kühlmittel 22 und/oder von zweitem Kühlmittel 24 in den Kühlkreislauf 10 steuern. Der ebenfalls gezeigte Wärmetauscher 14 dient dazu, die mittels des strömenden Kühlmittels 22, 24 und/oder einer entsprechenden Mischung aus dem ersten Kühlmittel und zweitem Kühlmittel 22, 24 zu entnehmen und so das in den Kühlleitungen 10 strömende Kühlmittel bzw. die Mischung aus erstem und zweitem Kühlmittel ausreichend zu kühlen. Ausreichend zu kühlen bedeutet, dass das strömende Kühlmittel 22, 24 der elektrischen Maschine 1 durch Erwärmung Wärme entnehmen kann, wodurch die elektrische Maschine 1 gekühlt wird.

Es ist von Interesse die Beimischung des zweiten Kühlmittels 24 an einen Leistungszustand der elektrischen Maschine 1 anzupassen. Wird besonders viel Leistung und damit auch besonders viel Scheinleistung erzeugt, so kann durch einen erhöhten Anteil des zweiten Kühlmittels 24 eine effizientere Kühlung erreicht werden, wodurch ein Überschreiten der zulässigen Grenztemperaturen vermieden werden kann.

Man kann in diesem Zusammenhang auch von einer Art "Leistungsbooster" sprechen. Das heißt, die Beimischung des zweiten Kühlmittels erfolgt nur, sofern die Leistung der elektrischen Maschine 1, zum Beispiel kurzfristig gesteigert werden soll.

Ferner ergibt sich für die erfindungsgemäße elektrische Maschine 1 der Vorteil, dass eine Verringerung der Baugröße bei unveränderter Leistung, möglich ist, da die Kühlleistung entsprechend erhöht wird. Ebenso erlaubt die elektrische Maschine 1 gemäß der vorliegenden Erfindung eine Leistungserhöhung der elektrischen Maschine 1 bei unveränderter Baugröße.

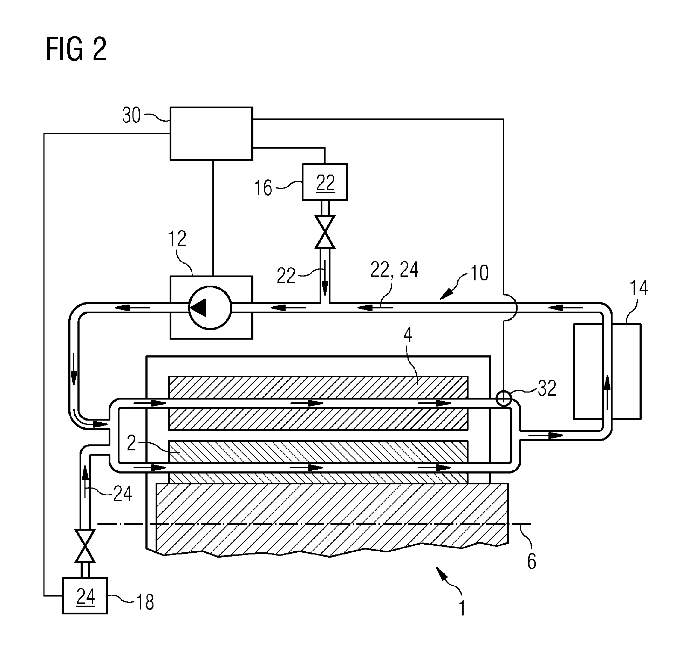

Fig. 2 zeigt eine weitere Ausführungsform der elektrischen Maschine 1 gemäß der vorliegenden Erfindung. Im Unterschied zu der in Fig. 1 gezeigten Ausführungsform wird in Fig. 2 das erste Kühlmittel 22 stromaufwärts von der Kühlmittelpumpe 12 zugeführt, wohingegen das zweite Kühlmittel 24 an einem weiteren Abschnitt des Kühlkreislaufs 10 stromabwärts der Kühlmittelpumpe 12, hinzugefügt wird. Durch eine derartige Anordnung kann das zweite Kühlmittel 24 insbesondere an solchen Abschnitten der elektrischen Maschine 1 innerhalb des Kühlkreislaufs 10 beigemischt werden, die bekanntermaßen einer besonderen thermischen Beanspruchung ausgesetzt sind. Derartige Abschnitte der elektrischen Maschine 1 sind dem Fachmann bekannt, so dass an dieser Stelle keine weiteren Erläuterungen erforderlich sind. Ohne Einschränkung ist es möglich, mehr als ein zweites Kühlmittelreservoir 18 (nicht gezeigt) an weiteren Abschnitten des Kühlkreislaufs 10 (nicht gezeigt) bereitzustellen, die das zweite Kühlmittel 24 in den Kühlkreislauf 10 abgeben. Die Abgabe des zweiten Kühlmittels 24 in den Kühlkreislauf 10 wird wie zuvor durch die Steuereinheit 30 gesteuert. Wie zuvor liefert die Messeinheit 32 mindestens einen Parameter an die Steuervorrichtung 30, mit der diese in Kommunikation steht. Für die in Fig. 2 gezeigte Ausführungsform erfolgt die Beimischung des zweiten Kühlmittels 24 an mindestens einem Abschnitt des Kühlkreislaufs 10. Das zweite Kühlmittel 24 ist also an mindestens einem Abschnitt des Kühlkreislaufs 24 beimischbar.

Wenngleich die vorliegende Erfindung anhand ausgewählter Ausführungsformen erläutert wurde, so ist sie keinesfalls als darauf beschränkt zu verstehen. Vielmehr dienen die erläuterten Ausführungsformen zum allgemeinen Verständnis der Erfindung ohne diese jedoch einzuschränken.

## Patentansprüche

1. Elektrische Maschine (1)
umfassend einen Kühlkreislauf (10) mit mindestens einem Kühlmittel (22) zum Kühlen der elektrischen Maschine; eine Steuereinrichtung (30) eingerichtet, um dem mindestens einen Kühlmittel (22) ein zweites Kühlmittel (24)beizumischen.

2. Elektrische Maschine (1)nach Anspruch 1,
wobei das zweite Kühlmittel (24) eine höhere Wärmekapazität als das mindestens eine Kühlmittel (22) aufweist.

3. Elektrische Maschine (1) nach einem der Ansprüche 1 oder 2,
wobei das mindestens eine Kühlmittel (22) und/oder das zweite Kühlmittel (24)gasförmig sind im Kühlbetrieb der elektrischen Maschine (1).

4. Elektrische Maschine (1) gemäß Anspruch 3,
wobei das mindestens eine Kühlmittel (22) und das zweite Kühlmittel (24) nach der Beimischung eine ideale Mischung bilden.

5. Elektrische Maschine (1) gemäß einem der Ansprüche 1 bis 4,
wobei die Steuereinheit (30) eingerichtet ist, einen Anteil des zweiten Kühlmittels (24) innerhalb des Kühlmittelkreislaufs (10) nach Beimischung abhängig von einem Leistungszustand der elektrischen Maschine (1) festzulegen.

6. Elektrische Maschine (1) gemäß Anspruch 1 bis 5,
wobei die Steuereinheit (30) einrichtet ist, ein Verhältnis von dem mindestens einen Kühlmittel (22) und dem zweiten Kühlmittel (24) nach der Beimischung zu steuern und/oder zu regeln.

7. Elektrische Maschine (1) gemäß Anspruch 1 bis 6,
weiter umfassend mindestens eine Messeinheit (32) in Kommunikation mit der Steuereinheit;
wobei die Messeinheit zum Erfassen von mindestens einem Parameter des Kühlmittelkreislaufs (10), der elektrischen Maschine (1) und/oder der Mischung des mindestens einen Kühlmittels (22) und des zweiten Kühlmittels (24) eingerichtet ist.

8. Elektrische Maschine (1) gemäß Anspruch 7,
wobei der mindestens eine Parameter Temperatur, Druck und/oder Zusammensetzung der Mischung aus dem mindestens einen Kühlmittel (22) und dem zweiten Kühlmittel (24) umfasst.

9. Elektrische Maschine (1) gemäß Anspruch 7 oder 8,
wobei der mindestens eine Parameter den Leistungszustand der elektrische Maschine (10) und/oder eine Temperatur eines Abschnitts der elektrische Maschine (10) umfasst.

10. Elektrische Maschine (1) gemäß einem der Ansprüche 1 bis 9,
wobei das zweite Kühlmittel (24) zu dem mindestens einen Kühlmittel (22) außerhalb des Kühlkreislaufs (10) beimischbar ist.

11. Elektrische Maschine (1) gemäß Anspruch 1 bis 9,
wobei das zweite Kühlmittel an mindestens einem Abschnitt des Kühlkreislaufs (10) beimischbar ist.

12. Elektrische Maschine (1) gemäß einem der vorhergehenden Ansprüche,
wobei die elektrische Maschine einen Stator und einen radial zu einer Drehachse angeordneten Rotor umfasst.

13. Elektrische Maschine (1) gemäß einem der vorstehenden Ansprüche,
wobei der Kühlkreislauf einen Wärmetauscher (14) umfasst.

14. Elektrische Maschine (1) gemäß einem der vorstehenden Ansprüche,
wobei der Kühlkreislauf (10) eine Kühlmittelpumpe (12) umfasst.

15. Elektrische Maschine (1) gemäß einem der vorstehenden Ansprüche,
wobei die elektrische Maschine ein Generator oder ein Elektromotor ist.
